**Europäisches Patentamt**

**European Patent Office**

**Office européen des brevets**

(19)

(11) Veröffentlichungsnummer : **0 070 027**
**B1**

(12) # EUROPÄISCHE PATENTSCHRIFT

(45) Veröffentlichungstag der Patentschrift :
09.09.87

(51) Int. Cl.⁴ : **E 21 D 20/02**

(21) Anmeldenummer : **82106230.4**

(22) Anmeldetag : **13.07.82**

(54) Schlauchpatrone mit Kupplungs- und Halteelement.

(30) Priorität : 14.07.81 DE 8120545 U
01.07.82 DE 8218774 U

(43) Veröffentlichungstag der Anmeldung :
19.01.83 Patentblatt 83/03

(45) Bekanntmachung des Hinweises auf die Patenterteilung : 09.09.87 Patentblatt 87/37

(84) Benannte Vertragsstaaten :
AT BE CH DE FR GB IT LI SE

(56) Entgegenhaltungen :
FR-A- 2 246 762
FR-A- 2 453 789
GB-A- 2 045 836
US-A- 4 136 774

(73) Patentinhaber : Bergwerksverband GmbH
Franz-Fischer-Weg 61
D-4300 Essen 13 (DE)

(72) Erfinder : Mehesch, Hans, Dr., Dipl.-Ing.
Ernestinenstrasse 220
D-4300 Essen 1 (DE)
Erfinder : Kempmann, Helmut, Dipl.-Ing.
Klarastrasse 14
D-4350 Recklinghausen (DE)
Erfinder : Paar, Willem, Dipl.-Ing.
Hambeg 51
NL-6041 Roermond (NL)

(74) Vertreter : Weydert, Robert et al
OFFICE DENNEMEYER S.à.r.l. P.O. Box 1502
L-1015 Luxembourg (LU)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Einrichtung zur Herstellung einer aus mindestens zwei Schlauchpatronen bestehenden, durchgehenden, im Bereich des Bohrlochtiefsten arretierbaren, Ladesäule zur Befestigung von Ankerstangen mittels eines Zweikomponentenklebers.

Üblicherweise erfolgt das Befestigen von Ankern, Schrauben oder Bolzen, insbesondere im Untertagebergbau, mittels härtbarer organischer Harze, wie z. B. ungesättigten Polyesterharzen, Epoxidharzen und/oder Polyurethan-Gießharz. Die Harze werden mittels Schlauchpatronen, die auch Harz- oder Klebepatronen genannt werden, in die Bohrlöcher eingeführt. Innerhalb einer Schlauchpatrone befinden sich die beiden Komponenten aus Harz und Härter in getrennten Abschnitten. Nach dem Einführen der Schlauchpatronen in das Bohrlochtiefste werden diese durch das drehende Eintreiben der Ankerstangen zerstört, die Komponenten vermischt und miteinander zur Reaktion gebracht.

Nach dem Aushärten des Kunstharzmörtels oder einer anderen Klebemasse ist die Ankerstange fest mit dem Gebirge verbunden.

Beim Einführen von Schlauchpatronen, insbesondere in aufwärts geführte Bohrlöcher bestehen hinsichtlich des Festlegens der Schlauchpatronen im Bereich des Bohrlochtiefsten aufgrund der Schwerkraft Schwierigkeiten. Um das Herausgleiten der Schlauchpatronen aus derartigen Bohrlöchern zu verhindern, hat man die Schlauchpatrone mit einem beispielsweise aus Schaumgummi hergestellten bauchbindeartigen Haltering versehen. Dabei hat sich als nachteilig herausgestellt, daß sich beim Einführen der Patrone ins Bohrloch oberhalb der Schlauchpatrone ein Luftpolster bildet, welches die Einführung der Schlauchpatrone in das Bohrlochtiefste erschwert, teilweise sogar unmöglich macht.

Ähnliche Probleme treten bei wasserführenden Gebirgsschichten auf, da der Wasserdruck unter Umständen die mit einem Haltering umgebene Schlauchpatrone wieder aus dem Bohrloch herausdrückt.

Ein weiterer Nachteil ist beim Einschieben von Schlauchpatronen in Bohrlöcher die abwärts, horizontal oder aufwärts gerichtet sind, darin zu sehen, daß durch die wurstförmig abgebundenen Endbereiche der Schlauchpatronen eine optimale Hintereinanderreihung mehrerer Schlauchpatronen innerhalb eines Bohrlochs nicht möglich ist. Durch da Überlappen der Schlauchpatronenenden innerhalb eines Bohrlochs wird zwangsläufig mehr Kunstharz verwendet als unbedingt erforderlich ist. Desgleichen stellt sich bei einer unterbrochenen Ladesäule von Schlauchpatronen der Nachteil eines verminderten Ankereffektes heraus. Insbesondere bei Krümmungen aufweisenden Bohrlöchern oder auch Bohrlöchern in besonders gebrächem Gestein oder Kohle ist mit den herkömmlichen Schlauchpatronen keine durchgehende Ladesäule herzustellen.

Demgegenüber hat sich die Erfindung die Aufgabe gestellt, eine Einrichtung zur Herstellung einer aus mindestens zwei Schlauchpatronen bestehenden, durchgehenden, im Bereich des Bohrlochtiefsten arretierbaren Ladesäule zu schaffen, die auf einfache Weise unter Vermeidung der oben beschriebenen Nachteile die Möglichkeit schafft, eine optimale Verteilung des Kunstharzes zur Befestigung von Ankerstangen vorzunehmen, wobei der bestmögliche Ankereffekt gewährleistet ist.

Diese Aufgabe wird erfindungsgemäß dadurch gelöst, daß die Enden der Schlauchpatrone oder die mit Kappen beaufschlagten Enden kuppelbar ausgebildet sind, wobei mindestens ein Ende einer Schlauchpatrone und/oder eine Kappe mit einem Halteelement versehen ist.

Im Rahmen der Erfindung erweist es sich als besonders vorteilhaft, daß die mindestens aus einem zylindrischen Abschnitt bestehenden, die Enden der Schlauchpatronen aufnehmenden, Kappen mit einem steilen Innengewinde oder Lamellen versehen sind und auf der Kopfplatte ein Kupplungselement aufweisen.

Weiterhin erweist es sich als besonders vorteilhaft, daß die Enden der Schlauchpatrone als Kupplungselemente ausgebildet sind, wobei jede Schlauchpatrone eine nach innen gerichtete Ausnehmung und am anderen Ende eine mit der Ausnehmung der zu verbindenden Schlauchpatrone korrespondierende axiale Verlängerung aufweist.

Weitere Vorteile der Erfindung sind in den Unteransprüchen näher beschrieben.

Der technische Fortschritt der Erfindung ist im wesentlichen darin begründet, daß die Kupplungselemente in Verbindung mit den Halteelementen unter Verwendung eines ausreichend steifen, jedoch auch nachgiebigen Materials auf einfache Weise das Herstellen eines der vorgegebenen Bohrlochlänge entsprechenden, durchgehenden Patronenstranges ermöglicht und somit den gewünschten Ankereffekt über die gesamte Bohrlochlänge gewährleistet.

Darüber hinaus sind die Kupplungselement nicht nur für Schlauchpatronen, sondern auch für Glas- und Kohle-Kunststoff-Patronen zu verwenden, wobei sie insbesondere in Verbindung mit Glas und Kohle-Kunststoff-Patronen auch als Verschluß ausgebildet sind.

Mehrere Ausführungsbeispiele der Erfindung sind in den Zeinungen dargestellt und werden im folgenden näher erläutert. Es zeigen :

Figur 1 ein Ausführungsbeispiel zweier mit Kupplungselementen und einem Halteelement versehener Patronen (starre Außenhülse),

Figur 2 einen Schnitt durch ein Halteelement,

Figur 3 eine teilweise Seitenansicht eines Halteelementes,

Figur 4 eine Draufsicht auf das in den Fig. 2 und 3 dargestellte Halteelement,

Figur 5 die Verbindung zweier Schlauchpatronen mit Hilfe von als Bajonettverbindung ausgebildeten Kupplungselementen,

Figur 6 einen Schnitt nach den Linien A-B in Fig. 5,

Figur 7 die Verbindung zweier Schlauchpatronen mittels als Schraubverbindung ausgebildeter Kupplungselemente, und

Figur 8 die Verbindung zweier Schlauchpatronen mit Hilfe der als Steckverbindung ausgebildeten Kupplungselemente.

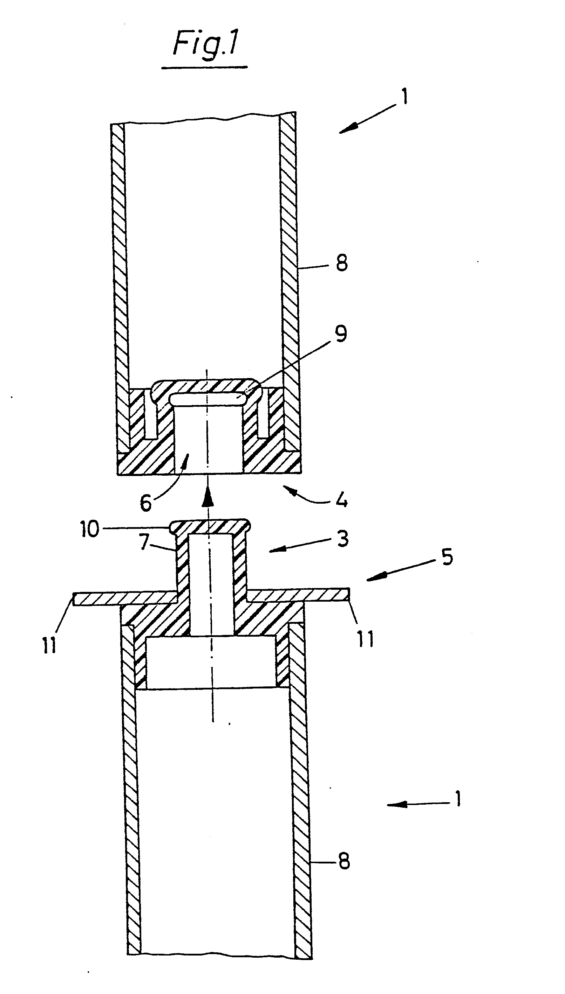

In dem in Fig. 1 dargestellten Ausführungsbeispiel sind die an den Enden der Patronen 1 vorgesehenen Verschlüsse als Kupplungselemente 3, 4 ausgebildet. Die Kupplungselemente 3, 4 sind jeweils stopfenartig in die rohrartige Außenhülle 8 einer Schlauchpatrone 1 nach dem Füllen mit Harz und Härter einsetzbar. Das Kupplungselement 4 weist in axialer Richtung der Schlauchpatrone 1 eine Ausnehmung 6 auf, wobei die Ausnehmung 6 im Ausnehmungstiefsten eine radiale Erweiterung 9 vorsieht. Das am anderen Ende einer Schlauchpatrone 1 bzw. an dem mit dem Kupplungselement 4 zu verbindenden Ende einer Schlauchpatrone 1 angeordnete Kupplungselement 3 besteht aus einer axialen Verlängerung 7 an deren Spitze eine wulstartige Erweiterung 10 vorgesehen ist. Zum Verbinden zweier Patronen 1 wird die Verlängerung 7 aus flexiblem Material unter Anwendung eines geringen Druckes in die Ausnehmung 6 des Kupplungselementes 4 gedrückt. Der Wulst 10 setzt sich in der radialen Erweiterung 9 derart fest, daß der für die Herstellung einer durchgehenden Ladesäule erforderliche Halt hinsichtlich Druck oder Zug in ausreichendem Maße gewährleistet ist. Das Kupplungselement 3 kann gleich bei der Herstellung durch entsprechenden Gießvorgang oder auch im Nachhinein durch ein zusätzliches, beispielsweise aufsteckbares, Halteelement 5 ergänzt werden, wobei die finger- oder zackenartig radial abstehenden Fortsätze 11 die über den Querschnitt der Patrone hinausgehen, der einzelnen Schlauchpatrone 1 oder der Ladesäule innerhalb des Bohrlochs eine unverrückbare Position sicherstellen.

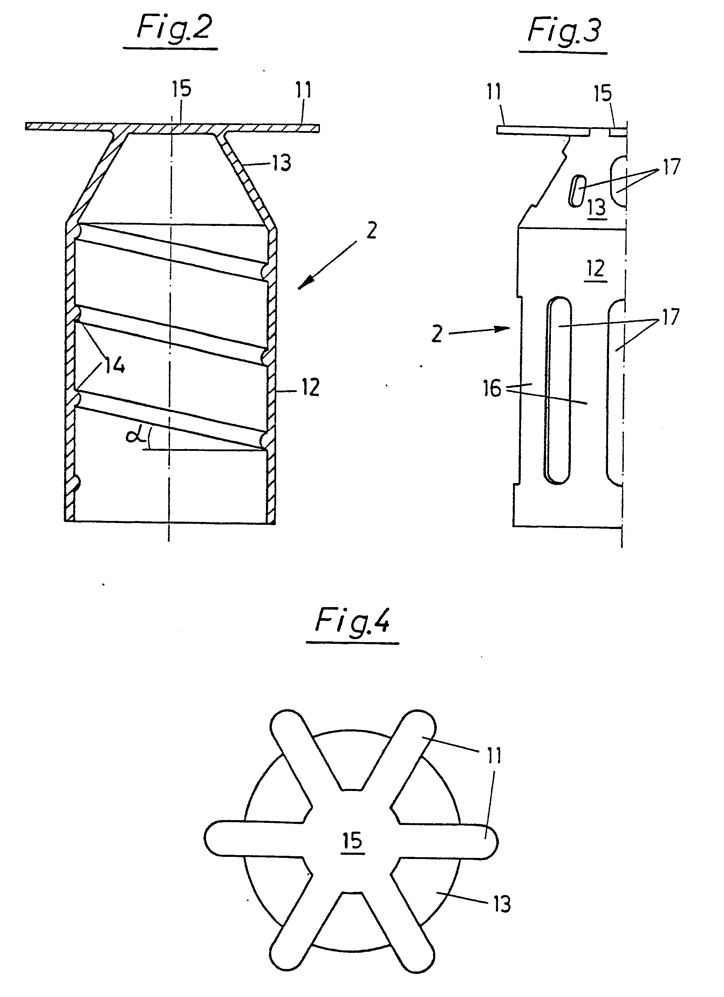

In den Fig. 2, 3 und 4 ist ein weiteres Ausführungsbeispiel für ein Halteelement 5 dargestellt. Diese Ausführung ist als auf Schlauchpatronen aufsteckbare Kappe 2 ausgebildet. Die Kappe 2 ist aus einem geringfügig stabileren Werkstoff hergestellt als die nicht dargestellte Schlauchpatrone. Als Werkstoff zur Herstellung derartiger Halteelemente 5 wird vorteilhafterweise ein thermoplastischer Kunststoff, beispielsweise Polyäthylen oder Polypropylen, vorgeschlagen. Die Kappe 2 besteht im wesentlichen aus einem zylindrischen, ein Innengewinde 14 aufweisenden, Abschnitt 12 der am oberen Ende in einen kegelstumpfförmigen Abschnitt 13 übergeht. Der kegelstumpfförmige Abschnitt 3 bildet an seinem oberen Ende eine im Vergleich zum Querschnitt des zylindrischen Abschnitts 12 geringer bemessene Kopfplatte 15, an welcher über den Umfang verteilt, radial angeordnete Fortsätze 11 angeordnet sind. Die Fortsätze 11 überragen in radialer Richtung wie dies insbesondere aus der Draufsicht in Fig. 4 zu entnehmen ist, den Querschnitt der Kappe 2. Abgesehen von der Ausführung der Fortsätze 11 in dem Ausführungsbeispiel nach den Fig. 2 bis 4 ist sowohl deren Ausführung, beispielsweise in zackenartiger Form sowie deren Anzahl so variierbar, daß sie den Zweck der lokalen Befestigung innerhalb eines Bohrlochs erfüllen. Um ein einfaches und zerstörungsfreies Überdrehen der Kappe 2 auf die wurstartig ausgebildeten Enden der Schlauchpatronen gewährleisten zu können weist das Innengewinde 14 wenige Schraubengänge mit einem hohen Anstieg $\alpha$ auf.

Die äußeren Mantelflächen der Kappe 2 weisen in abwechselnder Reihenfolge axial angeordnete Aussparungen 17 und Rippen 16 auf. Die Aussparungen 17 im Bereich des unteren Abschnitts als auch im Bereich des kegelstumpfförmigen Abschnitts 12, 13 erleichtern die Zerstörung der Kappe 2 beim Eindrehen der Ankerstangen.

Die zwischen den Aussparungen 17 ebenfalls in axialer Richtung verlaufenden Rippen 16 geben der Kappe 2 die notwendige Stabilität. Um ein maschinelles Aufbringen derartiger Kappen auf die Schlauchpatronen durchführen zu können sind mindestens zwei Aussparungen 17 und zwar auf der Mantelfläche jeweils gegenüberliegende Aussparungen 17 verbreitert ausgebildet.

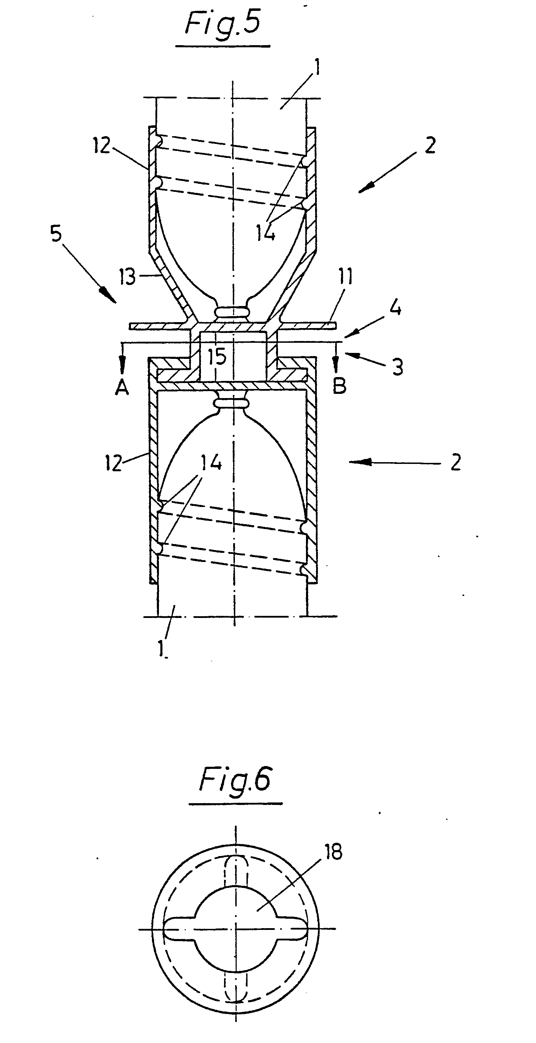

Das in Fig. 5 dargestellte Ausführungsbeispiel für die Verbindung zweier Schlauchpatronen 1 zeigt im Prinzip die in den Fig. 2 bis 4 dargestellte Kappen 2, die im Bereich der Kopfplatte 15 mit Kupplungselementen 3, 4 versehen sind. Die Kupplungselemente 3, 4, die aus in axialer Richtung verlaufenden Ausnehmungen und Verlängerungen bestehen, bilden in dem dargestellten Ausführungsbeispiel eine bekannterweise als Bajonettverschluß bezeichnete Verbindung.

Wie aus dem wiedergegebenen Schnitt nach den Linien A-B in Fig. 5 zu entnehmen ist, ist das Kupplungselement 3 mit einer Öffnung 18 versehen, in welche die bajonettartig ausgebildeten Enden der entsprechend korrespondierenden Kupplungselementes 4 eingreifen und verdreht werden können. Um eine aus Schlauchpatronen 1 gebildeten Ladesäule, die mit entsprechenden Kupplungselementen versehen ist, innerhalb des Bohrlochs einen ausreichenden Halt zu geben, ist mindestens eine Kappe 2 an der Kopfplatte 15 im Bereich eines Kupplungselementes 3, 4 mit einem aus Fortsätzen 11 bestehenden Halteelement 5 versehen.

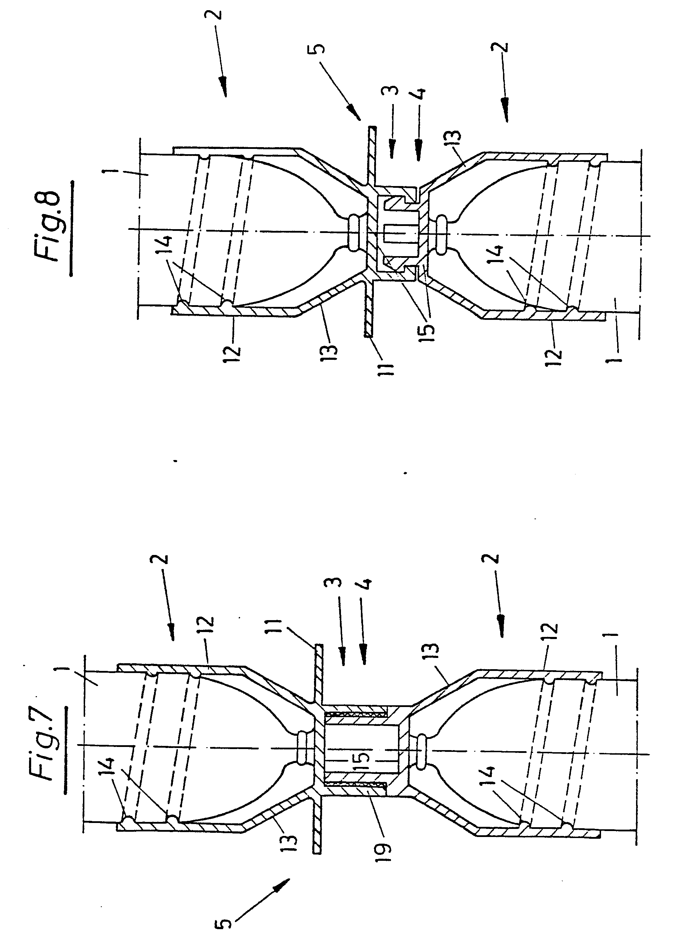

In den Fig. 7 und 8 sind weitere Ausführungsbeispiele dargestellt, die die Herstellung einer durchgehenden Ladesäule von einzelnen Schlauchpatronen 1 gewährleisten.

In Fig. 7 sind die Kupplungselement 3, 4 an den Enden der Kappen mit Schraubgewinden 19 versehen und als Schraubverbindung ausgebildet. In Fig. 8 ist ein Ausführungsbeispiel für eine Steckverbindung dargestellt, wobei ebenfalls wie die Ausführungsbeispiele in den Fig. 5 und 7 eine Kappe 2 wiederum mit einem Halteelement 5 versehen ist.

1 Schlauchpatrone
2 Kappe
3, 4 Kupplungselement
5 Halteelement
6 Ausnehmung
7 axialer Verlängerung
8 Außenhülle
9 Erweiterung (radial)
10 wulstartiger Erweiterung
11 Fortsätze
12 zylindrischer Abschnitt
13 kegelstumpfartiger Abschnitt
14 Innengewinde
α Anstieg
15 Kopfplatte
16 Rippen
17 Aussparungen
18 Öffnung
19 Gewinde

## Patentansprüche

1. Einrichtung zur Herstellung einer aus mindestens zwei Schlauchpatronen (1) bestehenden, durchgehenden, im Bereich des Bohrlochtiefsten arretierbaren, Ladesäule zur Befestigung von Ankerstangen mit Hilfe eines Zweikomponentenklebers, dadurch gekennzeichnet, daß die Enden der Schlauchpatronen (1) oder die mit Kappen (2) beaufschlagten Enden der Schlauchpatronen kuppelbar ausgebildet sind, wobei mindestens ein Ende einer Schlauchpatrone (1) und/oder eine Kappe (2) mit einem Halteelement (5) versehen ist.

2. Einrichtung nach Anspruch 1, dadurch gekennzeichnet, daß die mindestens aus einem zylindrischen Abschnitt (12) bestehenden, die Enden der Schlauchpatrone (1) aufnehmenden Kappen (2) mit einem steilen Innengewinde (14) oder Lamellen versehen sind und auf der Kopfplatte (15) ein Kupplungselement (3, 4) aufweist.

3. Einrichtung nach Anspruch 1, dadurch gekennzeichnet, daß die Kappen (2) aus einem zylindrischen, ein Innengewinde (14) oder Lamellen aufweisenden, und einen kegelstumpfförmigen Abschnitt (12, 13) bestehen, und auf den Kopfplatten (15) Kupplungselement (3, 4) aufweisen.

4. Einrichtung nach den Ansprüchen 1 bis 3, dadurch gekennzeichnet, daß mindestens eine der mittels Kupplungselementen (3, 4) zu verbindenden Kappen (2) mit einem Halteelement (5) mit finger- und/oder zackenartig ausgebildeten, über den Querschnitt der Kappe (2) hinausgehende Länge aufweisenden, Fortsätzen (11) versehen ist.

5. Einrichtung nach Anspruch 1, dadurch gekennzeichnet, daß die an den Kappen (2) befindlichen Kupplungselemente (3, 4) als Steck-, Schraub- oder Drehkupplungen ausgebildet sind.

6. Einrichtung nach den Ansprüchen 1 und 5, dadurch gekennzeichnet, daß die Kupplungselemente (3, 4) aus mit den Kopfplatten (15) verbundenen zylindrischen Ausnehmungen und in die Ausnehmungen eingreifenden axialen Verlängerungen bestehen.

7. Einrichtung nach Anspruch 1, dadurch gekennzeichnet daß die Enden der Schlauchpatrone (1) als Kupplungselemente (3, 4) ausgebildet sind, wobei jede Schlauchpatrone (1) eine nach innen gerichtete Ausnehmung (6) und am anderen Ende eine mit der Ausnehmung (6) der zu verbindenden Schlauchpatrone (1) korrespondierende axiale Verlängerung (7) aufweist.

8. Einrichtung nach Anspruch 7, dadurch gekennzeichnet, daß die zylindrisch geformte Ausnehmung (6) im Ausnehmungstiefsten eine radiale Erweiterung (9) und die Verlängerung (7) an dem in das Ausnehmungstiefste eingreifenden Ende eine radiale wulstartige Erweiterung (10) aufweist.

9. Einrichtung nach Anspruch 7, dadurch gekennzeichnet, daß die Kupplungselemente (3, 4) stopfenartig in die rohrartige Außenhüllse (8) einsetzbar ausgebildet sind.

10. Einrichtung nach den Ansprüchen 1 und 7, dadurch gekennzeichnet, daß die axiale Verlängerung (10) an einem Ende einer Schlauchpatrone (1) mit einem Halteelement (5) beispielsweise einem aufsteckbaren Halteelement versehen ist.

## Claims

1. Equipment to produce a continuous column charge of at least two flexible cartridges for anchoring tierods by the use of two-component adhesives, capable of being retained in position at the back of a borehole, and characterised by the fact that the ends of the flexible cartridges (1), or the ends of the flexible cartridges (1) held by caps (2), are constructed in such a way as to be capable of being coupled together, at least one end of a flexible cartridge (1) and/or a cap (2) being fitted with a retaining element (5).

2. Equipment as in Claim 1, characterised by the fact that the caps (2) covering the ends of the flexible cartridges (1) and consisting of at least one cylindrical section (12), are fitted with a steep internal thread (14) or rib, and have a coupling element (3, 4) in the end plate (15).

3. Equipment as in Claim 1, characterised by the fact that the caps (2) consist of a cylindrical section (12) with an internal thread (14) or ribs, and a truncated conical section (13), and have a coupling element (3, 4) on the end plate (15).

4. Equipment as in Claims 1 to 3, characterised by the fact that at least one of the caps (2) to be joined together by coupling elements (3, 4) is fitted with a retaining element (5) having finger-like or tooth-like prongs (11) of a length extending beyond the diameter of the cap (2).

5. Equipment as in Claim 1, characterised by the fact that the coupling elements (3, 4) on the caps (2) are constructed as bayonet or rotary couplings.

6. Equipment as in Claims 1 to 5, characterised by the fact that the coupling elements (3, 4) consist of cylindrical recesses associated with the end plates (15), and longitudinal protruding bosses engaging with the recesses.

7. Equipment as in Claim 1, characterised by the fact that the ends of the flexible cartridges (1) are constructed as coupling elements (3, 4), each flexible cartridge (1) having a recess (6) at one end, and a protruding longitudinal boss (7) at the other end, corresponding to the recess (6) in the flexible cartridge (1) to which it is to be joined.

8. Equipment as in Claim 7, characterised by the fact that the cylindrical recess (6) has a circumferential groove (9) at its innermost end, and the protruding boss (7) has a circumferential bulge (10) at the end engaging with the innermost end of the recess.

9. Equipment as in Claim 7, characterised by the fact that the coupling elements (3, 4) are constructed to be inserted into the outer shell (8) like plugs.

10. Equipment as in Claims 1 and 7, characterised by the fact that the longitudinal protruding boss (10) at one end of a flexible cartridge (1) is fitted with a retaining element (5), for example a push-on retaining element.

**Revendications**

1. Dispositif pour réaliser une colonne composée d'au moins deux cartouches flexibles (1), continue, pouvant être fixée dans la zone du fond du trou de forage, dans le but d'assurer la fixation de boulons d'ancrage à l'aide d'un produit collant à deux composants, caractérisé en ce que les extrémités des cartouches flexibles (1) ou les extrémités des cartouches flexibles équipées de chapeaux (2) sont prévus pour être accouplables, au moins une extrémité d'une cartouche flexible (1) et/ou un chapeau (2) étant prévu avec un élément de fixation (5).

2. Dispositif suivant la revendication 1 caractérisé en ce que les chapeaux (2), comportant au moins un segment cylindrique (12) et recevant les extrémités des cartouches flexibles (1), sont prévus avec des lamelles ou un filetage intérieur (14) à forte inclinaison et ils présentent, sur la plaque de tête (15), un élément d'accouplement (3, 4).

3. Dispositif suivant la revendication 1 caractérisé en ce que les chapeaux (2) sont formés d'un segment cylindrique (12) comportant un filetage intérieur (14) ou des lamelles et un segment tronconique (13) et ils présentent des éléments d'accouplement (3, 4) sur la plaque de tête (15).

4. Dispositif suivant l'une quelconque des revendications 1 à 3 caractérisé en ce qu'au moins un des chapeaux (2) devant être reliés au moyen des éléments d'accouplement (3, 4) est prévu avec un élément de fixation (5) pourvu d'appendices (11) en forme de doigts et/ou de dents, d'une longueur dépassant la section droite du chapeau (2).

5. Dispositif suivant la revendication 1 caractérisé en ce que les éléments d'accouplement (3, 4) disposés sur les chapeaux (2) sont réalisés sous la forme d'organes d'accouplement par rotation ou enfichage.

6. Dispositif suivant l'une quelconque des revendications 1 et 5 caractérisé en ce que les éléments d'accouplement (3, 4) sont formés d'évidements cylindriques liés aux plaques de tête (15) et de prolongements axiaux s'agrippant dans les évidements.

7. Dispositif suivant la revendication 1 caractérisé en ce que les extrémités des cartouches flexibles (1) forment des éléments d'accouplement (3, 4), chaque cartouche flexible présentant un évidement (6) dirigé vers l'intérieur et, à l'autre extrémité, un prolongement axial (7) correspondant à l'évidement (6) de la cartouche flexible (1) à raccorder.

8. Dispositif suivant la revendication 7 caractérisé en ce que l'évidement de forme cylindrique (6) présente, dans son fond, un élargissement radial (9) et le prolongement (7) présente, à son extrémité s'engageant dans le fond de l'évidement, un bourrelet radial (10).

9. Dispositif suivant la revendication 7 caractérisé en ce que les éléments d'accouplement (3, 4) sont réalisés sous la forme de bouchons pouvant être enfoncés dans les enveloppes extérieures tubulaires (8).

10. Dispositif suivant l'une quelconque des revendications 1 et 7 caractérisé en ce que le prolongement axial (10) est pourvu, à une extrémité d'une cartouche flexible (1), d'un élément de fixation (5), par exemple un élément de fixation enfichable.

## Fig.1

## Fig.2

## Fig.3

## Fig.4

## Fig.5

## Fig.6

Fig.7

Fig.8

0 070 027